# EUROPEAN PATENT APPLICATION

(11) **EP 2 930 040 A1**
(43) Date of publication of application: **14.10.2015**
(21) Application number: 12889495.3
(22) Date of filing: 06.12.2012
(51) Int. Cl.: B60K 6/445, B60W 10/08, B60W 20/00

(54) **DRIVE DEVICE FOR HYBRID VEHICLE**

(71) Applicant: TOYOTA JIDOSHA KABUSHIKI KAISHA, Toyota-shi, Aichi-ken, 471-8571 (JP)
(72) Inventor: KITABATAKE, Hirotatsu, Toyota-shi Aichi 471-8571 (JP); SUZUKI, Yosuke, Toyota-shi Aichi 471-8571 (JP); IWASE, Yuji, Toyota-shi Aichi 471-8571 (JP)
(74) Representative: Intès, Didier Gérard André
(86) International application number: PCT/JP2012/081623
(87) International publication number: WO 2014/087515

(57) **Abstract**

A drive device for hybrid vehicle includes a planetary gear mechanism, a first rotating machine, an engine, a one-way clutch, a second rotating machine, a drive wheel, and a braking device. The first rotating machine is coupled to a sun gear of the planetary gear mechanism. The engine and the one-way clutch are coupled to a carrier of the planetary gear mechanism. The second rotating machine and the drive wheel are coupled to a ring gear of the planetary gear mechanism. In response to a braking command (Step S10-Y), a rotation speed of the first rotating machine is relatively changed to a rotation speed of a positive rotation side (Step S40) to perform braking by the braking device (Step S50).

## Description

### Field

The present invention relates to a drive device for hybrid vehicle.

### Background

Conventionally, there is provided a power transmission device that includes a one-way clutch. For example, Patent Literature 1 discloses the hybrid vehicle that includes the internal-combustion engine, the electric machine unit to which the rotation from this internal-combustion engine is input, the electric motor driven by current supplied to the electric motor, the differential gear unit configured by at least three gear elements, with the first gear element being coupled to the electric machine unit, the second gear element being coupled to the output shaft, and the third gear element being coupled to the internal-combustion engine, and the braking means which stops the rotation of the third gear element.

### Citation List

### Patent Literature

Patent Literature 1: Japanese Laid-open Patent Publication No. 08-295140

### Summary

### Technical Problem

Here, to perform braking, a torque may be input to the one-way clutch. Inhibiting the input of the torque to the one-way clutch during braking is preferable.

The object of the present invention is to provide a drive device for hybrid vehicle that can reduce the input of the torque to the one-way clutch during braking. Solution to Problem

A drive device for hybrid vehicle according to the present invention includes: a planetary gear mechanism; a first rotating machine coupled to a sun gear of the planetary gear mechanism; an engine and a one-way clutch coupled to a carrier of the planetary gear mechanism; a second rotating machine and a drive wheel coupled to a ring gear of the planetary gear mechanism; and a braking device, and the drive device relatively changes a rotation speed of the first rotating machine to a rotation speed of a positive rotation side to perform braking by the braking device in response to a braking command.

In the drive device for hybrid vehicle, it is preferable to further include a control device, and preferable that the braking device includes a parking device coupled to the ring gear, the parking device being engaged by an actuator, the control device electrically controls the actuator, and the control device positively rotates the first rotating machine to engage the parking device by the actuator in response to a command of engaging the parking device as the braking command.

In the drive device for hybrid vehicle, it is preferable to further include a control device, and preferable that the braking device includes a brake device electrically controlled by the control device to generate braking power, and the control device relatively changes the rotation speed of the first rotating machine to a rotation speed of the positive rotation side to cause the brake device to generate braking power in response to the braking command.

In the drive device for hybrid vehicle, it is preferable that if the braking command commands a sudden braking, the rotation speed of the first rotating machine is relatively changed to a rotation speed of the positive rotation side to perform braking.

### Advantageous Effects of Invention

In response to a braking command, the drive device for hybrid vehicle according to the present invention relatively changes a rotation speed of a first rotating machine to a rotation speed of a positive rotation side to perform braking by a braking device. The drive device for hybrid vehicle according to the present invention provides an effect of allowing the reduction of the input of the torque to the one-way clutch during braking.

### Brief Description of Drawings

FIG. 1 is a skeleton diagram of a vehicle according to an embodiment.
FIG. 2 is a schematic configuration diagram of a parking device according to the embodiment.
FIG. 3 illustrates a table listing operations and engagements of a drive device for hybrid vehicle according to the embodiment.
FIG. 4 is a collinear diagram regarding a single-drive EV mode.
FIG. 5 is a collinear diagram regarding a dual-drive EV mode.
FIG. 6 is an explanatory view of a torque acting during engagement of parking.
FIG. 7 is a collinear diagram illustrating an operation during the engagement of parking of the embodiment.
FIG. 8 is a flowchart of a control during the engagement of parking of the embodiment.
FIG. 9 is a timing chart of a control during the engagement of parking of the embodiment.
FIG. 10 is an explanatory view of the torque acting during braking.
FIG. 11 is a collinear diagram illustrating an operation during braking of the embodiment.
FIG. 12 is a flowchart of a control during braking of the embodiment.
FIG. 13 is a timing chart of a control during braking of the embodiment.

### Description of Embodiments

Hereinafter, a description will be given of a drive device for hybrid vehicle according to an embodiment of the present invention in detail by referring to the accompanying drawings. This embodiment does not limit the invention. The constituent elements described in the following embodiment include the constituent elements that will readily occur to those skilled in the art or what is called equivalent range thereof.

### [Embodiment]

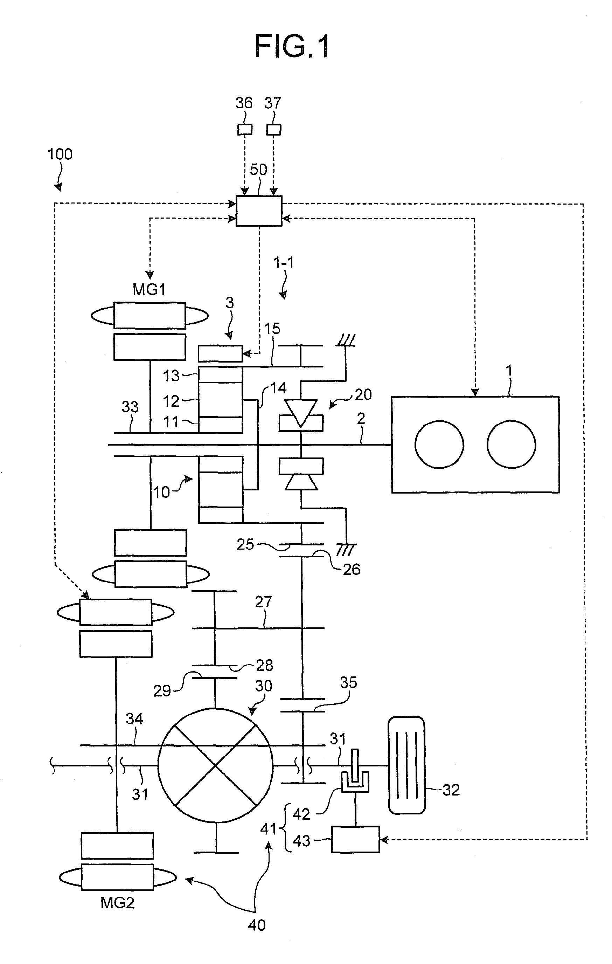

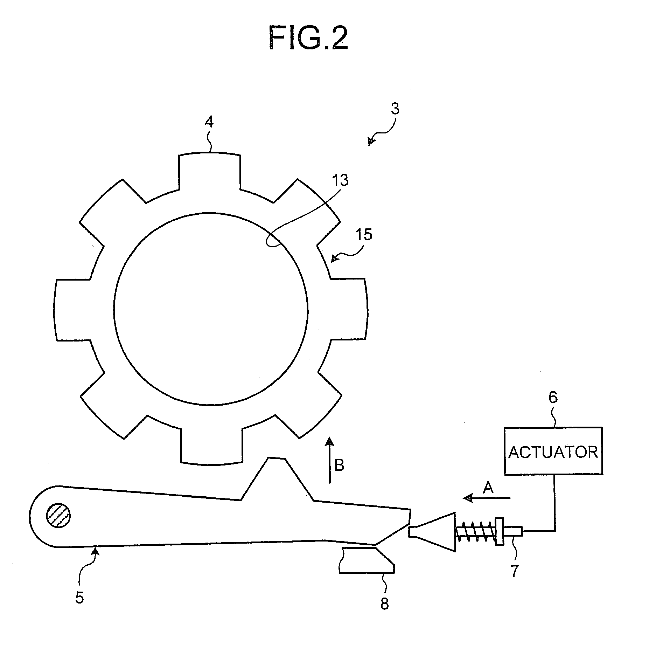

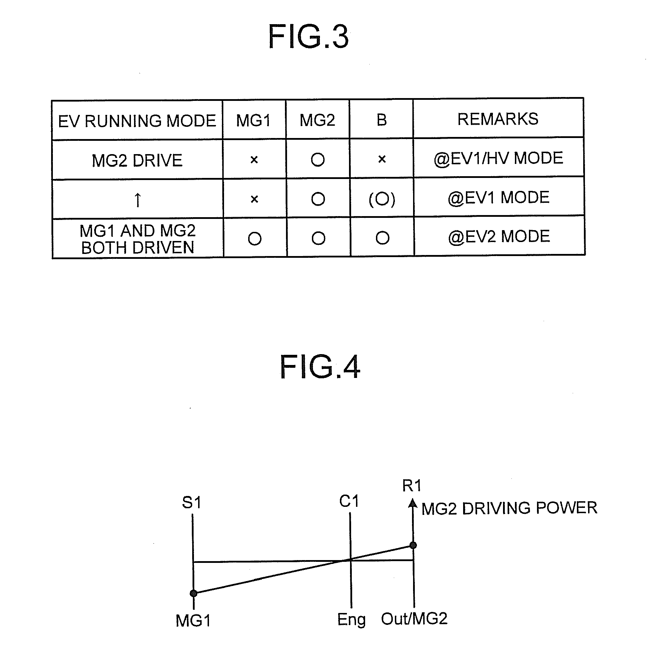

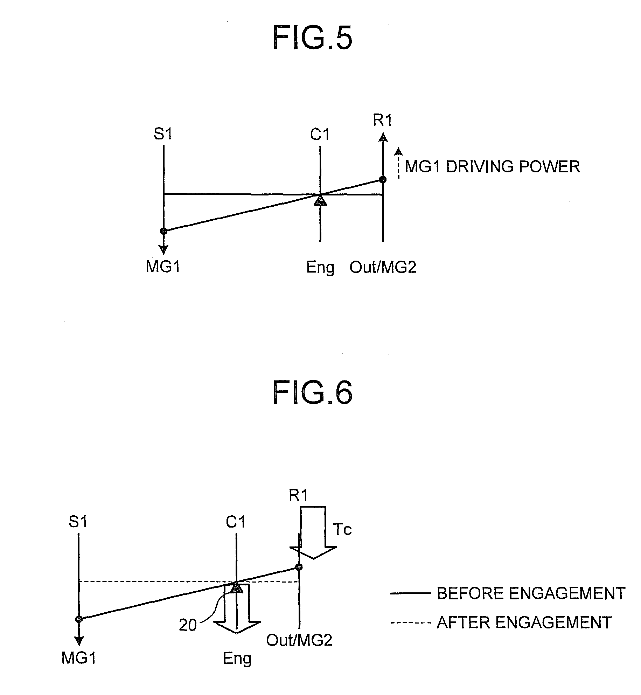

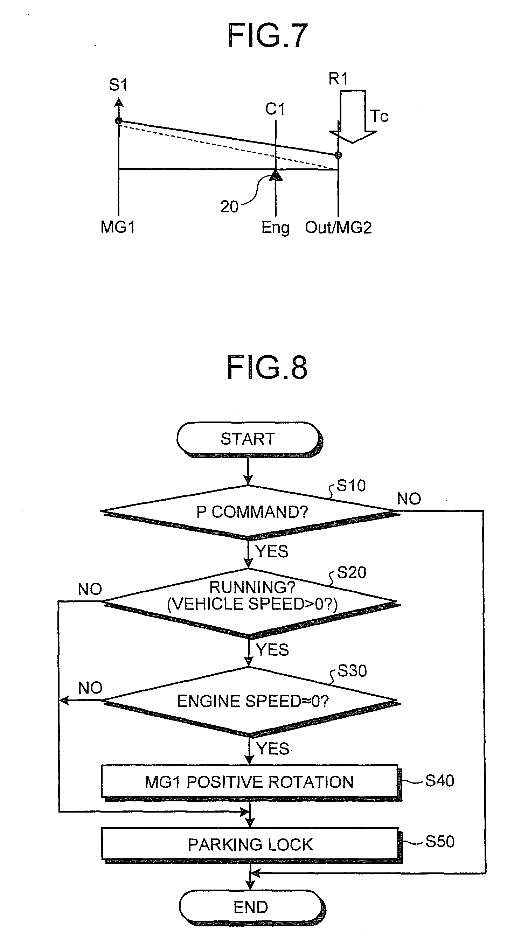

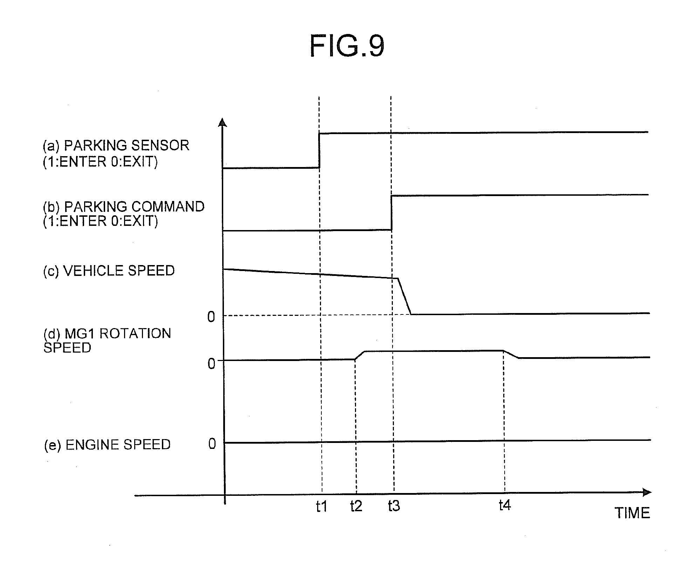

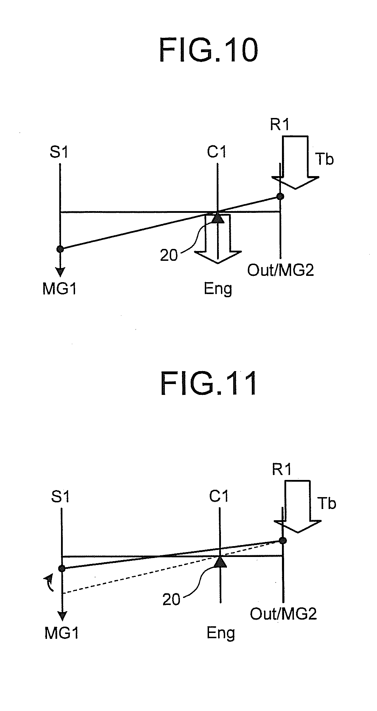

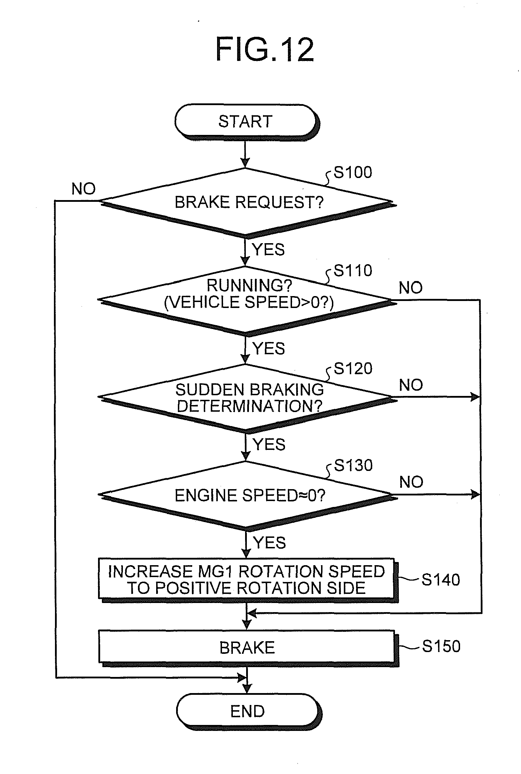

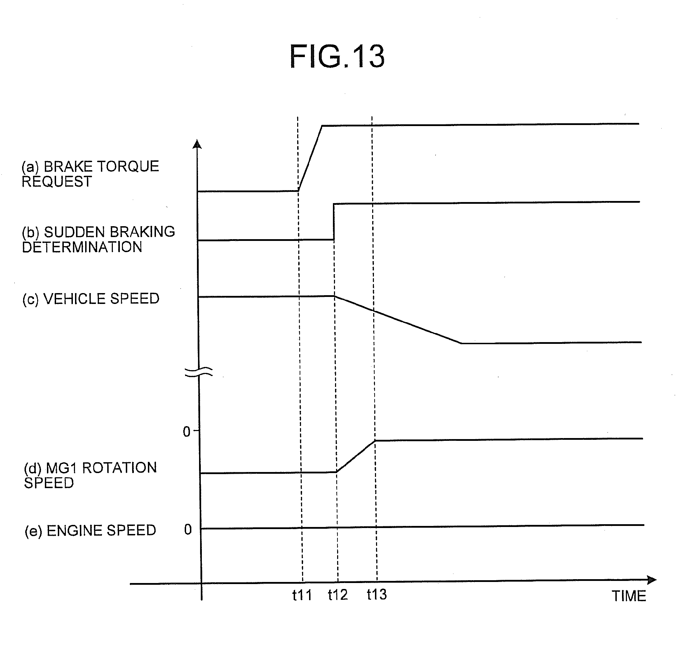

A description will be given of embodiment with reference to FIG. 1 to FIG. 13. This embodiment relates to a drive device for hybrid vehicle. FIG. 1 is a skeleton diagram of a vehicle according to an embodiment. FIG. 2 is a schematic configuration diagram of a parking device according to the embodiment. FIG. 3 illustrates a table listing operations and engagements of a drive device for hybrid vehicle according to the embodiment. FIG. 4 is a collinear diagram regarding a single-drive EV mode. FIG. 5 is a collinear diagram regarding a dual-drive EV mode. FIG. 6 is an explanatory view of a torque acting during engagement of parking. FIG. 7 is a collinear diagram illustrating an operation during the engagement of parking of the embodiment. FIG. 8 is a flowchart of a control during the engagement of parking of the embodiment. FIG. 9 is a timing chart of a control during the engagement of parking of the embodiment. FIG. 10 is an explanatory view of the torque acting during braking. FIG. 11 is a collinear diagram illustrating an operation during braking of the embodiment. FIG. 12 is a flowchart of a control during braking of the embodiment. FIG. 13 is a timing chart of a control during braking of the embodiment.

A vehicle 100 according to this embodiment includes a one-way clutch 20 for fixing an engine input element of a planetary gear mechanism 10. The vehicle 100 is provided with an HV system that has an EV running mode in which an engine 1 is stopped, the one-way clutch 20 is fixed, and a first rotating machine MG1 and a second rotating machine MG2 are both driven.

When engaging a parking device 3 during running, as illustrated in FIG. 6, a negative torque Tc is transmitted to an input shaft 2 via the planetary gear mechanism 10. This possibly inputs a large torque to the one-way clutch 20. In contrast to this, upon a command of engaging the parking device 3 during running, a drive device for hybrid vehicle 1-1 according to this embodiment, as illustrated in FIG. 7, relatively changes a rotation speed of the first rotating machine MG1 to a rotation speed of a positive rotation side to positively rotate the first rotating machine MG1. This reduces the input of the torque to the one-way clutch 20 during engagement of the parking device 3.

As illustrated in FIG. 1, the vehicle 100 is a hybrid (HV) vehicle that includes the engine 1, the first rotating machine MG1, and the second rotating machine MG2 as power sources. The vehicle 100 may be a plug-in hybrid (PHV) vehicle that can be charged with an external power supply. The vehicle 100 includes the planetary gear mechanism 10, the one-way clutch 20, the parking device 3, a brake device 40, and a drive wheel 32 in addition to the power sources.

The drive device for hybrid vehicle 1-1 according to the embodiment includes the engine 1, the planetary gear mechanism 10, the first rotating machine MG1, the second rotating machine MG2, the one-way clutch 20, the parking device 3, a friction brake device 41, and the drive wheel 32. The drive device for hybrid vehicle 1-1 may be configured by further including an ECU 50. The drive device for hybrid vehicle 1-1 is applicable to a front-engine, front-wheel-drive (FF) vehicle, a rear-engine, rear-wheel-drive (RR) vehicle, or a similar vehicle. The drive device for hybrid vehicle 1-1 is, for example, mounted on the vehicle 100 to have the axial direction in the vehicle-width direction.

The braking device of the drive device for hybrid vehicle 1-1 according to the embodiment includes the parking device 3 and the brake device 40.

The engine 1 as an engine converts combustion energy of fuel into a rotational motion of an output shaft and outputs the rotational motion. The output shaft of the engine 1 is coupled to the input shaft 2. The input shaft 2 is arranged coaxially with the output shaft of the engine 1 and on the extended line of the output shaft. The input shaft 2 is coupled to a carrier 14 of the planetary gear mechanism 10.

The planetary gear mechanism 10 is a single-pinion type, and includes a sun gear 11, a pinion gear 12, a ring gear 13, and the carrier 14. The ring gear 13 is arranged coaxially with the sun gear 11 and in the radially outward direction of the sun gear 11. The pinion gear 12 is arranged between the sun gear 11 and the ring gear 13, and meshes with each of the sun gear 11 and the ring gear 13. The pinion gear 12 is rotatably supported by the carrier 14. The carrier 14 is coupled to the input shaft 2, and rotates integrally with the input shaft 2. Accordingly, the pinion gear 12 is rotatable around the center axis line of the input shaft 2 together with the input shaft 2 (revolution). Additionally, the pinion gear 12 is supported by the carrier 14 and rotatable around the center axis line of the pinion gear 12 (rotation).

To the sun gear 11, a rotation shaft 33 of the first rotating machine MG1 is coupled. The rotor of the first rotating machine MG1 is coupled to the sun gear 11 via the rotation shaft 33, and rotates integrally with the sun gear 11. To the ring gear 13, a counter drive gear 25 is coupled. The counter drive gear 25 is an output gear that rotates integrally with the ring gear 13. The counter drive gear 25 is disposed on an outer peripheral surface of a cylindrical-shaped cylindrical member 15 and the ring gear 13 is disposed on the inner peripheral surface.

The counter drive gear 25 meshes with a counter driven gear 26. The counter driven gear 26 is coupled to a drive pinion gear 28 via a counter shaft 27. The counter driven gear 26 and the drive pinion gear 28 rotate integrally. The counter driven gear 26 meshes with a reduction gear 35. The reduction gear 35 is coupled to a rotation shaft 34 of the second rotating machine MG2. That is, the rotation of the second rotating machine MG2 is transmitted to the counter driven gear 26 via the reduction gear 35. The reduction gear 35 has a smaller diameter than that of the counter driven gear 26, and decelerates the rotation of the second rotating machine MG2 to transmit the rotation to the counter driven gear 26.

The drive pinion gear 28 meshes with a differential ring gear 29 of a differential 30. The differential 30 is coupled to the drive wheels 32 via right and left drive shafts 31. The ring gear 13 is coupled to the drive wheel 32 via the counter drive gear 25, the counter driven gear 26, the drive pinion gear 28, the differential 30, and the drive shaft 31. The second rotating machine MG2 is coupled to a power transmission path between the ring gear 13 and the drive wheel 32, and can transmit power to each of the ring gear 13 and the drive wheel 32.

The first rotating machine MG1 and the second rotating machine MG2 each have a function as a motor (electric motor) and a function as an electric generator. The first rotating machine MG1 and the second rotating machine MG2 are coupled to a battery via an inverter. The first rotating machine MG1 and the second rotating machine MG2 can convert the electric power supplied from the battery into a mechanical power to output the mechanical power, and can be driven by an input power to convert the mechanical power into an electric power. The electric power generated by the rotating machines MG1 and MG2 can be stored in the battery. The first rotating machine MG1 and the second rotating machine MG2 can employ, for example, AC synchronous motor-generators.

In the vehicle 100 of this embodiment, the one-way clutch 20, the counter drive gear 25, the planetary gear mechanism 10, and the first rotating machine MG1 are arranged coaxially with the engine 1 in this order from the side close to the engine 1. The drive device for hybrid vehicle 1-1 of this embodiment is a multi-shaft type where the input shaft 2 and the rotation shaft 34 of the second rotating machine MG2 are arranged on the different shafts.

The one-way clutch 20 is disposed at the input shaft 2. The one-way clutch 20 is a regulating mechanism that regulates the rotation of the carrier 14. Assuming that the rotation direction of the input shaft 2 during operation of the engine 1 is the positive direction, the one-way clutch 20 allows the rotation of the input shaft 2 in the positive direction and regulates the rotation in the negative direction.

The parking device 3 is a regulating device that restricts the rotation of the power transmission path of the drive device for hybrid vehicle 1-1. The parking device 3 restricts the rotation of the power transmission path coupling the ring gear 13 and the drive wheel 32. The parking device 3 of this embodiment is coupled to the ring gear 13. The parking device 3 restricts the rotation of the cylindrical member 15 having the ring gear 13. As illustrated in FIG. 2, the parking device 3 includes a parking gear 4, a parking pole 5, and a parking actuator 6.

The parking gear 4 is disposed at the outer peripheral surface of the cylindrical member 15. The parking pole 5 is disposed to be movable between a lock position and an unlocked position. The lock position meshes with the parking gear 4 to disable the rotation of the drive wheel 32. The unlocked position does not mesh with the parking gear 4 to allow the rotation of the drive wheel 32. FIG. 2 illustrates the parking pole 5 at the unlocked position. The parking pole 5 receives a biasing force in a direction from the lock position to the unlocked position by a biasing member such as a spring. The parking actuator 6 can move the parking pole 5 from the unlocked position to the lock position to engage the parking device 3. The parking actuator 6 also can move the parking pole 5 from the lock position to the unlocked position to release the parking device 3.

To engage the parking device 3, the parking actuator 6 moves a rod 7 in an engaging direction indicated by an arrow A in FIG. 2. This enters a tapered portion at a distal end of the rod 7 between the parking pole 5 and a supporting member 8. The tapered portion presses the parking pole 5 to the parking gear 4. The parking pole 5 pushed by the rod 7 moves as indicated by an arrow B in FIG. 2. The parking pole 5 meshes with the parking gear 4 to restrict the rotation of the parking gear 4.

On the other hand, to release the parking device 3, the parking actuator 6 moves the rod 7 in the direction opposite to the engaging direction indicated by the arrow A. This moves the parking pole 5 to the unlocked position by the biasing force by the biasing member to release the parking device 3.

Now returning to FIG. 1, the ECU 50 has a function as a control device that controls the vehicle 100. The ECU 50 is an electronic control device with a computer, and controls the engine 1, the first rotating machine MG1, the second rotating machine MG2, and the parking device 3. The ECU 50 receives inputs of signals indicative of various information such as information related to the engine 1, information related to the first rotating machine MG1, information related to the second rotating machine MG2, information related to a vehicle speed, information related to the battery, and information such as an accelerator position related to an operation input to operation equipment.

The ECU 50 is electrically coupled to a parking sensor 36. The ECU 50 can obtain operations and inputs to a parking button (not illustrated). When performing the operation input to engage the parking device 3 on the parking button, the parking sensor 36 outputs a signal indicative of the state of the parking button being 1. When the parking sensor 36 outputs the signal indicative of the state of the parking button being 1, the ECU 50 detects this signal as a command of engaging the parking device 3 by a driver (hereinafter also referred to as an "engagement command"). When the ECU 50 detects the engagement command, the ECU 50 outputs a command of moving the parking pole 5 to the lock position on the parking actuator 6 of the parking device 3.

When performing the operation input to release the parking device 3 on the parking button, the parking sensor 36 outputs a signal indicative of a state of the parking button being 0. When the parking sensor 36 outputs the signal indicative of the state of the parking button being 0, the ECU 50 detects this signal as a command of releasing the parking device 3 by the driver (hereinafter also referred to as a "release command"). When the ECU 50 detects the release command, the ECU 50 outputs a command of moving the parking pole 5 to the unlocked position on the parking actuator 6 of the parking device 3.

The ECU 50 is electrically coupled to a brake operation amount sensor 37. The brake operation amount sensor 37 is a sensor to detect an amount of operation of a brake pedal (not illustrated) or a similar component on a brake operator. The amount of brake operation is, for example, a pedal stroke, a pedal depressing force, and a pedal depressing speed. Based on the amount of brake operation obtained from the brake operation amount sensor 37, the ECU 50 calculates a required braking power requested by the driver. To ensure achieving the required braking power, which is calculated, the ECU 50 generates the braking power by the brake device 40.

The drive device for hybrid vehicle 1-1 of this embodiment has the brake device 40. The brake device 40 includes the friction brake device 41 and the second rotating machine MG2, which functions as a regenerative brake device. The regenerative brake device may further include the first rotating machine MG1.

The friction brake device 41 includes an electronically controlled brake system (ECB) as a brake control system. The friction brake device 41 generates the braking power by an actuator. The friction brake device 41 includes a brake unit 42 and a hydraulic controller 43. At each wheel of the vehicle 100, the brake unit 42 is disposed. The brake unit 42 provides the wheel with a braking torque to generate the braking power. The brake unit 42 generates the braking torque according to a hydraulic pressure supplied from the hydraulic controller 43. The brake unit 42 can be, for example, a disc brake mechanism.

The hydraulic controller 43 controls the hydraulic pressure supplied to the brake unit 42. The hydraulic controller 43, for example, includes a hydraulic pump, a pressure control valve, or a similar component. The hydraulic controller 43 controls a pump hydraulic pressure generated at the hydraulic pump and supplies the brake unit 42 at each wheel with the pump hydraulic pressure. The hydraulic controller 43 can independently control the hydraulic pressure supplied to the brake unit 42 at each wheel. In this embodiment, a brake actuator, which causes the friction brake device 41 to generate the braking power, includes the brake unit 42 and the hydraulic controller 43.

The ECU 50 determines target braking powers generated by the respective friction brake device 41 and second rotating machine MG2 based on the required braking power. The ECU 50, for example, determines target values of brake braking power and regenerative braking power so as to achieve the required braking power by the braking power generated by the friction brake device 41 (brake braking power) and the braking power generated by regenerative power generation by the second rotating machine MG2 (regenerative braking power).

The ECU 50 is electrically coupled to the hydraulic controller 43. The ECU 50 electrically controls the hydraulic controller 43. The ECU 50 controls the hydraulic pressure supplied from the hydraulic controller 43 to each of the brake units 42 so as to generate a targeted brake braking power by the brake unit 42. The ECU 50 controls a regenerative torque (MG2 torque) of the second rotating machine MG2 so as to generate a targeted regenerative braking power by the second rotating machine MG2.

The vehicle 100 can selectively execute hybrid (HV) running or EV running. The HV running is a running mode that causes the vehicle 100 to run using the engine 1 as a power source. In the HV running, the second rotating machine MG2 may additionally be used as the power source in addition to the engine 1.

The EV running is a running mode that causes running using at least any one of the first rotating machine MG1 or the second rotating machine MG2 as a power source. The EV running allows running while the engine 1 is stopped. The drive device for hybrid vehicle 1-1 according to this embodiment has a single-drive EV mode (single-motor EV mode) and a dual-drive EV mode (dual-motor EV mode) as the EV running mode. The single-drive EV mode causes the vehicle 100 to run using the second rotating machine MG2 as a single power source. The dual-drive EV mode causes the vehicle 100 to run using the first rotating machine MG1 and the second rotating machine MG2 as power sources. Here, in this description, the single-drive EV mode is also described as the "EV1 mode" and the dual-drive EV mode is also described as the "EV2 mode".

In the engagement table of FIG. 3, the mark of o in the columns of the first rotating machine MG1 and the second rotating machine MG2 denotes the state where the torque for running is output. The mark of × denotes the state where the torque for running is not output, that is, where any torque is not output, where the torque for except for running is output, where regeneration is performed, or a similar state. The "B" column denotes the state of the one-way clutch 20. The mark of o denotes an engagement, and the mark of × denotes releasing. Here, the engagement or releasing of the one-way clutch 20 is not directly controlled but caused by the rotating state of the input shaft 2.

In the HV mode, the engine 1 rotates and the input shaft 2 rotates positively. Accordingly, the one-way clutch 20 becomes a released state. The single-drive EV mode (EV1 mode) illustrated in FIG. 4 is executable in any state of releasing or engagement of the one-way clutch 20. In each collinear diagram, the S1 axis denotes the rotation speed of the sun gear 11 and the first rotating machine MG1. The C1 axis denotes the rotation speed of the carrier 14 and the engine 1. The R1 axis denotes the rotation speed of the ring gear 13. The rotation speed of the ring gear 13 is proportional to the rotation speed of the second rotating machine MG2 and the rotation speed of the drive shaft 31.

In the dual-drive EV mode (EV2 mode) illustrated in FIG. 5, the one-way clutch 20 becomes an engaging state. In the dual-drive EV mode, the first rotating machine MG1 outputs a negative torque during forward movement. The one-way clutch 20 engages to regulate the rotation of the carrier 14 so as to function as a reactive force receiver for the output torque (MG1 torque) of the first rotating machine MG1 and cause the ring gear 13 to output the positive torque corresponding to the MG1 torque. The positive torque output from the ring gear 13 is transmitted to the drive wheel 32 so as to generate the driving power for forward driving of the vehicle 100.

Here, in the case where a command of engaging the parking device 3 is executed during running, as will be described later with reference to FIG. 6, a problem of the torque being input to the one-way clutch 20 occurs. In FIG. 6, the solid line indicates a state before the parking device 3 engages, and the dashed line indicates a state after the parking device 3 engages. FIG. 6 illustrates a situation of when the parking device 3 engages to restrict the rotation of the ring gear 13 (dashed line) during running in a dual-drive EV mode (solid line). When the parking device 3 engages and the parking pole 5 meshes with the parking gear 4 during running, the negative torque Tc, which restricts the rotation, acts on the ring gear 13. An inertia of the first rotating machine MG1 and the MG1 torque serve as reactive force receivers. Thus, the negative torque Tc is transmitted to the carrier 14. This inputs the torque to the one-way clutch 20.

Not limited to the dual-drive EV mode, during the EV running, the torque is possibly input to the one-way clutch 20. For example, in the single-drive EV mode (see FIG. 4), the carrier 14 rotates in a low rotation or is in a state of stopping the rotation. At this time, when the parking device 3 engages, the torque is possibly input to the one-way clutch 20. The negative torque Tc caused by the engagement of the parking device 3 is likely to be a large torque. Accordingly, it is preferable to ensure inhibiting the input of the negative torque Tc to the one-way clutch 20.

Upon a command of engaging the parking device 3, the drive device for hybrid vehicle 1-1 according to this embodiment, as will be described with reference to FIG. 7, positively rotates the first rotating machine MG1. The drive device for hybrid vehicle 1-1, as indicated by the solid line in FIG. 7, positively rotates the first rotating machine MG1 to engage the parking device 3 by the parking actuator 6. The engagement of the parking device 3 stops the rotation of the ring gear 13 as indicated by the dashed line in FIG. 7. The positive rotation of the MG1 rotation speed allows the carrier 14 to positively rotate until the ring gear 13 stops rotating, ensuring the one-way clutch 20 to be released. That is, even if the negative torque Tc is transmitted to the carrier 14, the engagement of the one-way clutch 20 is restricted. This restricts the input of the torque to the one-way clutch 20.

With reference to FIG. 8 and FIG. 9, the following describes operations of the drive device for hybrid vehicle 1-1 in the case where the command of engaging the parking device 3 is executed. In the timing chart illustrated in FIG. 9, (a) shows a signal of the parking sensor 36, (b) shows a command to the parking actuator 6, (c) shows a vehicle speed, (d) shows an MG1 rotation speed, and (e) shows an engine speed. FIG. 9 illustrates operations when the command of engaging the parking device 3 is executed while the engine 1 is stopped and the vehicle is in the EV running. The control sequence illustrated in FIG. 8 is, for example, repeatedly executed at predetermined intervals.

At Step S10, the ECU 50 determines whether the command of engaging the parking device 3 is executed or not. The ECU 50 performs the determination of Step S10 based on the signal output from the parking sensor 36. When switching the signal output from the parking sensor 36 from, a command of releasing the parking device 3 by the driver (0: exit) to a command of engaging the parking device 3 by the driver (1: enter), the ECU 50 performs an affirmative determination at Step S10. In FIG. 9, at time t1, the signal of the parking sensor 36 changes from 0 (release command) to 1 (engagement command). In view of this, at the time t1 or later, the affirmative determination is performed at Step S10. As a result of the determination at Step S10, in the case where the command of engaging the parking device 3 is determined to be performed (Step S10-Y), the process proceeds to Step S20. If not (Step S10-N), this control sequence ends.

At Step S20, the ECU 50 determines whether the vehicle is during running or not. The ECU 50 determines whether the vehicle speed is greater than 0 or not. As the result of the determination, if determined as during running (Step S20-Y), the process proceeds to Step S30. If not (Step S20-N), the process proceeds to Step S50.

At Step S30, the ECU 50 determines whether the engine speed ≈ 0 is met or not. Step S30 determines whether the engagement of the parking device 3 has a possibility that engaging the one-way clutch 20 inputs the torque to the one-way clutch 20 or not. For example, in the case where the engine speed is equal to or less than a predetermined rotation speed, the ECU 50 performs the affirmative determination at Step S30. The predetermined rotation speed is, for example, the rotation speed sufficiently smaller than the engine speed region while the engine 1 is driving. The predetermined rotation speed is, for example, set as an upper limit value of the rotation speed at which there is a possibility of engaging the parking device 3 engages the one-way clutch 20 and inputs the torque to the one-way clutch 20. As a result of the determination at Step S30, if determined that the engine speed ≈ 0 is met (Step S30-Y), the process proceeds to Step S40. If not (Step S30-N), the process proceeds to Step S50.

At Step S40, the ECU 50 positively rotates the first rotating machine MG1. The ECU 50 commands the rotation at the predetermined positive rotation speed on the first rotating machine MG1. In FIG. 9, the ECU 50 commands the positive rotation of the MG1 rotation speed at time t2. When the MG1 rotation speed increases and becomes the predetermined positive rotation speed, the MG1 rotation speed is maintained at the rotation speed. After execution of Step S40, the process proceeds to Step S50.

At Step S50, the ECU 50 engages the parking device 3 to lock the rotation of the parking gear 4. The ECU 50 outputs a command of moving the parking pole 5 to the lock position to the parking actuator 6. In FIG. 9, at time t3, a signal value of the parking command to the parking actuator 6 is changed from released (0: exit) to engaged (1: enter). The parking actuator 6 moves the parking pole 5 to the lock position according to the engagement command from the ECU 50 to engage the parking device 3. The execution of Step S50 ends this control sequence.

When the parking device 3 engages, the ECU 50 sets the MG1 rotation speed 0. In FIG. 9, the ECU 50 outputs a command of setting the MG1 rotation speed 0 at time t4 after detection of the parking pole 5 being at the lock position.

### (Brake Control)

Next, the following describes the brake control of the brake device 40 by the drive device for hybrid vehicle 1-1 of this embodiment. With the vehicle 100 of this embodiment, as will be described later with reference to FIG. 10, the torque may be input to the one-way clutch 20 during braking. FIG. 10 illustrates a situation of the braking in the dual-drive EV mode. In the dual-drive EV mode, when the friction brake device 41 puts a brake or the braking is performed by regeneration of the second rotating machine MG2, a braking torque Tb in the negative direction acts on the ring gear 13. The braking torque Tb is transmitted to the carrier 14 and then is input to the one-way clutch 20. Not limited to the dual-drive EV mode, if braking is performed during EV running, the braking torque Tb engages the one-way clutch 20. This is likely to input the torque to the one-way clutch 20.

As will be described later with reference to FIG. 11, in response to the braking command, the drive device for hybrid vehicle 1-1 according to the embodiment relatively changes the rotation speed of the first rotating machine MG1 to the rotation speed of the positive rotation side. The relative change of the MG1 rotation speed to the rotation speed of the positive rotation side positively rotates the carrier 14. The drive device for hybrid vehicle 1-1 relatively changes the rotation speed of the first rotating machine MG1 to the rotation speed of the positive rotation side to cause the brake device 40 to generate the braking power. This reduces the torque being input to the one-way clutch 20 during braking by the brake device 40.

With reference to FIG. 12 and FIG. 13, the following describes operations of the drive device for hybrid vehicle 1-1 in the case where the braking command is executed by an operation input to the brake operator such as a brake pedal. In the timing chart in FIG. 13, (a) indicates a brake torque request (required braking power) and is calculated based on the detection result of the brake operation amount sensor 37. In FIG. 13, (b) indicates a sudden braking determination flag, (c) indicates the vehicle speed, (d) indicates the MG1 rotation speed, and (e) indicates the engine speed. FIG. 13 illustrates the operation while the engine 1 is stopped and the EV running is performed, and a braking request is performed on the brake device 40. The control sequence illustrated in FIG. 12 is, for example, repeatedly executed at predetermined intervals.

At Step S100, the ECU 50 determines whether the brake request is performed or not. The ECU 50, for example, performs the determination of Step S100 based on the detection result by the brake operation amount sensor 37. The ECU 50, for example, performs the affirmative determination at Step S100 when a braking operation input to the brake operator by the driver is detected. In FIG. 13, the brake torque request is detected at time t11, and the affirmative determination is performed at Step S100. As a result of the determination at Step S100, if the brake request is determined to be present (Step S100-Y), the process proceeds to Step S110. If not (Step S100-N), this control sequence ends.

At Step S110, the ECU 50 determines whether the vehicle is during running or not. The ECU 50 determines whether the vehicle speed is greater than 0 or not. As the result of the determination, if determined as during running (Step S110-Y), the process proceeds to Step S120. If not (Step S110-N), the process proceeds to Step S150.

At Step S120, the ECU 50 determines whether the sudden braking determination is performed or not. The ECU 50, for example, performs the determination of Step S120 based on a sudden braking determination flag. In this embodiment, based on an anteroposterior acceleration of a vehicle, a request brake torque, the vehicle speed, the request hydraulic pressure of the hydraulic controller 43, brake depression force, or a similar specification, the sudden braking determination flag is turned ON. For example, when the brake torque request is equal to or more than a predetermined value, the sudden braking determination flag is turned ON. In FIG. 13, the sudden braking determination flag changes from OFF to ON at time t12. As the result of the determination at Step S120, if the sudden braking determination is determined to be performed (Step S120-Y), the process proceeds to Step S130. If not (Step S120-N), the process proceeds to Step S150.

At Step S130, the ECU 50 determines whether the engine speed ≈ 0 is met or not. The ECU 50 determines whether there is a possibility that the braking by the brake device 40 engages the one-way clutch 20 and inputs the torque to the one-way clutch 20 or not. In the case where the engine speed is equal to or less than the predetermined rotation speed, the ECU 50, for example, performs the affirmative determination at Step S130. The predetermined rotation speed is, for example, set as an upper limit value of the rotation speed at which there is a possibility of the braking by the brake device 40 engages the one-way clutch 20 and inputs the torque to the one-way clutch 20. As a result of the determination at Step S130, if determined that the engine speed ≈ 0 is met (Step S130-Y), the process proceeds to Step S140. If not (Step S130-N), the process proceeds to Step S150.

At Step S140, the ECU 50 relatively increases the MG1 rotation speed to the positive rotation side. The ECU 50 relatively changes a target value of the rotation speed of the first rotating machine MG1 to the rotation speed of the positive rotation side. If the MG1 rotation speed before changing the rotation speed is a negative rotation speed, the MG1 rotation speed after the change is, for example, set to a negative rotation speed and the rotation speed whose absolute value is smaller than the MG1 rotation speed before the change. Alternatively, the MG1 rotation speed may be changed from a negative rotation speed to a positive rotation speed or 0 rotations. In the case where the MG1 rotation speed before the change is the positive rotation, the MG1 rotation speed may be set to increase, or may be set so as to maintain the MG1 rotation speed as it is. After execution of Step S140, the process proceeds to Step S150.

At Step S150, the ECU 50 performs the brake control. The ECU 50 outputs the braking command to at least any one of the friction brake device 41 or the second rotating machine MG2 to generate the braking power. When the ECU 50, for example, outputs a command of relatively changing the MG1 rotation speed to the rotation speed of the positive rotation side, the ECU 50 commands the friction brake device 40 and the second rotating machine MG2 to start braking. In FIG. 13, at time t13, the MG1 rotation speed becomes the target rotation speed of the positive rotation side relatively. However, the ECU 50 commands the friction brake device 40 and the second rotating machine MG2 to start braking before the time t13. The execution of Step S150 ends this control sequence.

As described above, in response to the braking command (Step S10-Y and S100-Y), the drive device for hybrid vehicle 1-1 according to this embodiment relatively changes the rotation speed of the first rotating machine MG1 to the rotation speed of the positive rotation side (Steps S40 and S140) to perform the braking by the braking device (Steps S50 and S150). This reduces the input of the torque to the one-way clutch 20 during braking.

The braking device of the drive device for hybrid vehicle 1-1 includes the parking device 3 engaged by the parking actuator 6. The ECU 50 of the drive device for hybrid vehicle 1-1 electrically controls the parking actuator 6. When executing the command of engaging the parking device 3 as the braking command, the ECU 50 positively rotates the first rotating machine MG1 and engages the parking device 3 by the parking actuator 6. Accordingly, the input of the torque to the one-way clutch 20 when the parking device 3 engages and the rotation of the drive wheel 32 is locked is reduced.

The braking device that the drive device for hybrid vehicle 1-1 has includes the brake device 40. The brake device 40 is electrically controlled by the ECU 50 to generate the braking power. In response to the braking command, the ECU 50 relatively changes the rotation speed of the first rotating machine MG1 to the rotation speed of the positive rotation side to cause the brake device 40 to generate the braking power. This reduces the input of the torque to the one-way clutch 20 during braking by the brake device 40.

If the braking command commands the sudden braking (Steps S10-Y and S120-Y), the drive device for hybrid vehicle 1-1 relatively changes the rotation speed of the first rotating machine MG1 to the rotation speed of the positive rotation side to perform braking. This allows reducing the input of the torque to the one-way clutch 20 in the case where there is a possibility that a large torque is input to the one-way clutch 20.

### [First Modification of Embodiment]

In the embodiment (see FIG. 8 and FIG. 12), when performing the braking request, the ECU 50 relatively changes the rotation speed of the first rotating machine MG1 to the rotation speed of the positive rotation side (Steps S40 and S140) and then runs braking (Steps S50 and S150). However, instead of this, the relative change of the rotation speed of the first rotating machine MG1 to the rotation speed of the positive rotation side and the execution of braking may be performed simultaneously. For example, a command to change the rotation speed of the first rotating machine MG1 and the braking command to the parking actuator 6 and the brake device 40 may be simultaneously output.

For example, in the case where a command to engage the parking device 3 is executed, before the rotation speed of the first rotating machine MG1 becomes the positive rotation, the engagement command may be output to the parking actuator 6. Even if this operation is performed, as long as the rotation speed of the first rotating machine MG1 is set to be the positive rotation before the parking device 3 engages and a negative torque Tc is input to the carrier 14, the torque input to the one-way clutch 20 can be reduced.

If the braking command is executed to the brake operator by operation input, before the rotation speed of the first rotating machine MG1 relatively changes to the rotation speed of the positive rotation side after the change, the braking command can be output to the brake device 40. Even if this operation is performed, as long as the rotation speed of the first rotating machine MG1 relatively changes to the rotation speed of the positive rotation side before the brake device 40 starts generating the braking power, the torque input to the one-way clutch 20 can be reduced.

### [Second Modification of Embodiment]

The embodiment electrically controls the engagement and releasing of the parking device 3. However, instead of this, the parking device 3 mechanically engaged and released in conjunction with a shift operation with a wire or a similar component may be mounted on the vehicle 100. In this case, for example, based on the detection result by the sensor detecting the shift operation, a command of engaging the parking device 3 may be detected or predicted. For example, when detecting an operation of moving a shift lever to a parking (P) position, the release command to the parking device 3 by the driver may be detected or predicted and the first rotating machine MG1 may be positively rotated preliminary.

With the embodiment, the friction brake device 41 is electrically controlled to generate the braking power. However, instead of this, the friction brake device 41 that mechanically generates the braking power in conjunction with the braking operation to the brake operator may be mounted on the vehicle 100. In this case, for example, when detecting the braking command based on the detection result by the brake operation amount sensor 37, the rotation speed of the first rotating machine MG1 may be relatively changed to the rotation speed of the positive rotation side.

### [Third Modification of Embodiment]

With the embodiment, regardless of whether the friction brake device 41 performs the braking or the second rotating machine MG2 performs the braking, in response to the braking command, the rotation speed of the first rotating machine MG1 relatively changes to the rotation speed of the positive rotation side. However, instead of this, in the case where the friction brake device 41 performs the braking, the rotation speed of the first rotating machine MG1 may be relatively changed to the rotation speed of the positive rotation side.

For example, with the vehicle 100, for comparatively small required braking power, there may be a case where a braking by the regeneration of the second rotating machine MG2 is prioritized over the braking by the friction brake device 41. In the case where the regenerative braking power by the second rotating machine MG2 can achieve the required braking power, the second rotating machine MG2 runs the braking. In the case where only the regenerative braking power by the second rotating machine MG2 cannot achieve the required braking power, the second rotating machine MG2 and the friction brake device 41 can perform the braking. In such case, when the friction brake device 41 does not perform braking, even if the braking command is executed, the second rotating machine MG2 may perform the braking without the rotation speed of the first rotating machine MG1 relatively changed to the rotation speed of the positive rotation side. When the friction brake device 41 performs braking, in response to the braking command, the rotation speed of the first rotating machine MG1 may be relatively changed to the rotation speed of the positive rotation side to perform the braking by the friction brake device 41.

### [Fourth Modification of Embodiment]

With the embodiment, the engine is the engine 1. However, instead of the engine 1, another engine may be mounted to the vehicle 100. With the embodiment, the parking device 3 is disposed at the cylindrical member 15. However, the parking device 3 may be disposed at another position. The parking device 3, for example, may restrict the rotation of the rotation shaft 34 of the second rotating machine MG2. That is, the parking device 3 may be directly coupled to the ring gear 13, or may be coupled via a gear mechanism or a similar mechanism. With the embodiment, the operation commands such as the engagement command and the release command of the parking device 3 are executed with the parking button. However, the operation commands are not limited to be performed with the parking button. For example, the operation commands may be performed by an operation input on a shift lever or a similar component or the operation command may be the operation command using touchscreen or using audio.

The configuration of the friction brake device 41 is not limited to the examples. The brake device 40 may include the brake apparatus other than the friction brake device 41 and the second rotating machine MG2.

### [Fifth Modification of Embodiment]

With the embodiment, when meeting the engine speed ≈ 0 (S30-Y and S130-Y), the rotation speed of the first rotating machine MG1 is relatively changed to the rotation speed of the positive rotation side. However, regardless of the engine speed, the rotation speed of the first rotating machine MG1 may be relatively changed to the rotation speed of the positive rotation side. With the embodiment, when performing the sudden braking determination (S120-Y), the rotation speed of the first rotating machine MG1 is relatively changed to the rotation speed of the positive rotation side. However, not limited to the case where the sudden braking determination is performed, the rotation speed of the first rotating machine MG1 may be relatively changed to the rotation speed of the positive rotation side.

The matters that are disclosed in the embodiment and each modifications described above may be combined as necessary.

### Reference Signs List

- 1-1: power transmission device
- 1: engine
- 3: parking device
- 6: parking actuator
- 10: planetary gear mechanism
- 11: sun gear
- 12: pinion gear
- 13: ring gear
- 14: carrier
- 20: one-way clutch
- 32: drive wheel
- 36: parking sensor
- 37: brake operation amount sensor
- 40: brake device
- 41: friction brake device
- 50: ECU
- 100: vehicle

## Claims

1. A drive device for hybrid vehicle, comprising:
a planetary gear mechanism;
a first rotating machine coupled to a sun gear of the planetary gear mechanism;
an engine and a one-way clutch coupled to a carrier of the planetary gear mechanism;
a second rotating machine and a drive wheel coupled to a ring gear of the planetary gear mechanism; and
a braking device, wherein
the drive device relatively changes a rotation speed of the first rotating machine to a rotation speed of a positive rotation side to perform braking by the braking device in response to a braking command.

2. The drive device for hybrid vehicle according to claim 1, further comprising
a control device, wherein
the braking device includes a parking device coupled to the ring gear, the parking device being engaged by an actuator,
the control device electrically controls the actuator, and
the control device positively rotates the first rotating machine to engage the parking device by the actuator in response to a command of engaging the parking device as the braking command.

3. The drive device for hybrid vehicle according to claim 1, further comprising
a control device, wherein
the braking device includes a brake device electrically controlled by the control device to generate braking power, and
the control device relatively changes the rotation speed of the first rotating machine to a rotation speed of the positive rotation side to cause the brake device to generate braking power in response to the braking command.

4. The drive device for hybrid vehicle according to claim 1, wherein
if the braking command commands a sudden braking, the rotation speed of the first rotating machine is relatively changed to a rotation speed of the positive rotation side to perform braking.
